# EUROPÄISCHE PATENTANMELDUNG

(11) **EP 0 537 448 A1**
(43) Veröffentlichungstag der Anmeldung: **21.04.1993**
(21) Anmeldenummer: 92114405.1
(22) Anmeldetag: 24.08.1992
(51) Int. Cl.: E05F 15/00, H01B 7/10, H01H 13/12, F16P 3/16

(54) **Leistenförmiger Endanschlag**

(30) Priorität: 25.08.1991 DE 9110408 U
(71) Anmelder: HÜBNER GUMMI- UND KUNSTSTOFF GmbH, D-34019 Kassel (DE)
(72) Erfinder: Hübner, Reinhard, W - 3500 Kassel 1 (DE)
(74) Vertreter: Walter, Helmut, Dipl.-Ing.

(57) **Zusammenfassung**

Leistenförmiger, in sich elastisch verformbarer Endanschlag (1) für ein elektromotorisch beweglichen Bauteil. Das bewegliche Bauteil soll sich einem feststehenden Bauteil nähern, bis der Endanschlag (1) soweit komprimiert ist, daß sich zwei in den Endanschlag integrierte, Kontakte (15) des Schaltkreises des Elektromotors einander genähert haben. Der Endanschlag ist mit einem Fuß (3) befestigt und mit einem Kopf (2) dem feststehenden Bauteil zugekehrt. Die Kontakte werden von elektrisch Leitenden Partikeln (15) gebildet, die zu beiden Seiten eines Spaltes (14) eingebettet sind. Der Kopf des Endanschlags (1) hat im Querschnitt etwa die Form eines nach außen gewölbten Halbkreises, der stufenlos in die Leistenseitenwände (12,13) einläuft. Hinter dem Kopf befindet sich der Spalt (14), der, im Querschnitt konzentrisch zur Außenseite des Kopfes in einem vorgegebenen Abstand (18) hinter dieser Außenseite verläuft.

## Beschreibung

Die Neuerung bezieht sich auf einen leistenförmigen Endanschlag aus in sich elastisch verformbaren Material gemäß dem Gattungsbegriff des Anspruchs 1.

Solche Endanschläge werden beispielsweise der freien Kante einer Schiebetür Zugeordnet, um deren Schließbewegung abzuschließen, wenn der Endanschlag am Türrahmen zur Anlage gekommen ist und der Endanschlag um ein vorbestimmtes Maß komprimiert wurde. Im komprimierten Zustand der den Endanschlag bildenden Leiste liegen die beiden Kontakte aufeinander und beeinflussen den Schaltstromkreis des Elektromotors derart, daß die Schiebetür nicht weiter bewegt wird; im allgemeinen Fall löst der Schaltkreis im Schließen ein Signal aus, das den Motor still setzt.

Personen, die durch eine solche Tür gehen, laufen Gefahr, zwischen schließender Tür und Türrahmen eingeklemmt zu werden. Durch die gattungsgemäßen leistenförmigen Endschalter wird verhindert, daß dieses Einklemmen mit zu großer Kraft erfolgt, gegebenfalls wird nicht nur die Schließbewegung der Tür beendet, sondern in eine Öffnungsbewegung umgewandelt, sodaß ein Passant durch die sich zur Unzeit schließende Tür nur unwesentlich aufgehalten wird. Da der Gefahr des Eingeklemmtwerdens insbes. die Finger von Passanten ausgesetzt sind, werden gattungsgemäße leistenförmige Endanschläge mit entsprechender Schaltfunktion häufig auch als Fingerschutzprofile bezeichnet.

In neuerer Zeit werden dabei die in die Leisten integrierten Kontakte von Partikeln aus elektrisch leitendem Material gebildet, die in weitgehend gleichmäßiger Verteilung in das eigentliche elektrisch nicht leitende Leistenmaterial so eingebaut sind, daß zumindest einige von ihnen in den einander anzunähernden Spaltwänden liegen und miteinander in Berührung kommen, wenn die Leiste in die Stellung komprimiert wurde, in der die Schaltfunktion ausgelöst wird.

Aufgabe der Neuerung ist es, einen gattungsgemäßen leistenförmigen, in sich elastisch verformbaren Endschalter, also ein "Fingerschutzprofil" so auszubilden, daß das Zusammenwirken mit betroffenen Personen möglichst schonend erfolgt und eine Schaltfunktion sehr zuversässig bewirkt wird.

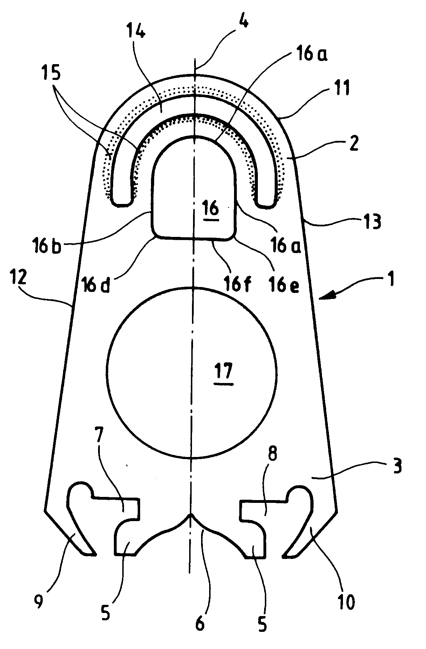

Die Erfindung, mit der diese Aufgabe gelöst wird, ist durch die Schutzansprüche gekennzeichnet. Sie wird nachfolgend anhand der Zeichnung erläutert, deren einzige Figur ein neuerungsgemäßes Fingerschutzprofil bzw. einen neuerungsgemäßen leistenförmigen Endschalter im Querschnitt darstellt.

Die den Endschalter im wesentlichen darstellende Leiste aus einem in sich elastischen Material, insbes. einem Polymer, ist in ihrer Gesamtheit mit 1 gekennzeichnet. Die Kontur der Leiste ist über ihre gesamte Länge gleich, sodaß der dargestellte Querschnitt an jeder beliebigen Stelle der Leiste liegen kann. Vorzugsweise wird das für einen Anwendungsfall benötigte Material von einem wesentlich längeren Vorratsmaterial abgelängt.

Die Leiste weist einen Kopfbereich 2 und einen Fußbereich 3 an den beiden Enden einer Symmetrieachse 4 des Profilquerschnittes auf.

Der Fußbereich 3 ist im wesentlichen gekennzeichnet durch einen zentralen Fußabschnitt 5, dessen Außenfläche nach innen gewölbt ist, sodaß symmetrisch zur Symmetrieachse 4 eine Längsvertiefung 6 teilweise umschlossen ist. Im Übergangsbereich vom Fußbereich zum eigentlichen Profil springen, wiederum symmetrisch zur Symmetrieachse 4 zwei leistenförmige Vertiefungen 7, 8 zurück und die Bereiche zu beiden Seiten des zentralen Fußabschnitts 5 werden seitwärts begrenzt von je einer Lippe 9 bzw. 10, während sie nach außen offen sind. Die Elastizität der Lippen 9, 10 ist deutlich größer als die Elastizität des zentralen Fußabschnitts 5. Durch Abspreizen der Lippen 9, 10 kann der leistenförmige Kontaktschalter mit den Rücksprüngen bzw. Vertiefungen 7, 8 auf zwei Flansche aufgestülpt werden und nach dem Ende der Einwirkung der Abspreizkraft wird der leistenförmige Kontaktschalter auf den beiden Flanschen gehalten.

Der Kopfbereich 2 ist etwa halbkreisförmig nach außen gewölbt und der Halbkreisbogen 11 läuft stufenlos in die beiden Profilseitenwände 12, 13 ein, die etwas divergierend zum Fußbereich 3 hin verlaufen. Konzentrisch hinter dem Halbkreisbogen verläuft der Spalt 14, dessen Seitenwände mit elektrisch leitenden Partikeln 15 durchsetzt sind, die so dicht und in solcher Verteilung einander zugeordnet sind, daß nach dem Zusammendrücken der gesamten Leiste bis zur weitestgehenden Beseitigung des Spalts 14 eine Kontaktwirkung erzielt wird, die als Schaltsignal auf einen nicht beschriebenen Schaltkreis eingegeben wird, um zu wirken, wie es eingangs beschrieben wurde.

Um eine gute Elastizität des leistenförmigen Endschalters bei ausreichender Formstabilität und möglichst geringem Gewicht gewährleisten zu können, weist die den Endschalter bildende Leiste zwei allseits umschlossene Kammern 16 und 17 auf. Die dem Kopfteil 2 nähere Kammer 16 folgt mit ihrer Kontur der Profilaußenkontur und der Kreisbogenabschnitt 16a läuft stufenlos in Seitenwandabschnitte 16b, 16c ein, die kurz nach dem Einlaufen des Bogens 11 in die äußeren Seitenwände des Profils mittels Übergangsbögen 16d, 16e in eine untere Begrenzungswand 16f einlaufen, die senkrecht zu der Symmetrieachse 4 verläuft.

Die zweite Kammer 17 ist zwischen der ersten Kammer 16 und dem Fußabschnitt 3 angeordnet und hat kreisrunden Querschnitt.

Damit ist ein leistenförmiger, in sich elastischer Endschalter aufgezeigt, der die nötige Formstabilität hat, trotzdem aber so elastisch ist, daß er mit einer Mindesteinwirkung auf einen Passanten der beispielsweise durch die zur Unzeit schließende Tür geht, zuverlässig ein Haltesignal erzeugt. Hierzu trägt wesentlich die Kreisbogenform 11 der Außenform 11 bis 13 und des Spaltes 14 bei, indem der Schaltkontakt auch dann zuverlässig bewirkt wird, wenn die Tür mit der Kontaktleiste schräg an ein Hindernis anläuft.

Als zweckmäßig erweist es sich, den Abstand 18 zwischen dem Rand 11 und der Außenwand des Spaltes 14, den Abstand 19 zwischen der Innenwand des Spaltes 14 und der Scheitellinie der Kammer 16 sowie schließlich die Spaltweite 20 gleich zu dimensionieren.

## Patentansprüche

1. Leistenförmiger, in sich elastisch verformbarer Endanschlag für ein gegenüber einem feststehenden Bauteil in zwei Richtungen elektromotorisch bewegliches Bauteil, wobei sich das bewegliche Bauteil in seiner einen Bewegungsrichtung dem feststehenden Bauteil nähert, bis der Endanschlag durch das Zusammenwirken des Bauteilpaares soweit komprimiert ist, daß sich zwei in den Endanschlag integrierte, im entspannten Zustand des Endanschlags voneinander beabstandete Kontakte des Schaltkreises des Elektromotors einander genähert haben, um über den Schaltkreis das bewegliche Bauteil anzuhalten bzw. an weiterer Bewegung zu hindern, wobei der Endanschlag mit einem Fuß am einen der beiden Bauteile befestigt ist und mit einem Kopf dem anderen der beiden Bauteile zugekehrt ist und die Kontakte von elektrisch leitenden Partikeln gebildet werden, die in Bereiche des Endanschlags zu beiden Seiten eines mit Veränderung der Spannung im Endanschlag veränderlichen Spaltes eingebettet sind dadurch gekennzeichnet, daß der Kopf des Endanschlags (1) im Querschnitt der den Endanschlag bildenden Leiste etwa die Form eines nach außen gewölbten Halbkreises hat, der stufenlos in die Leistenseitenwände (12,13) einläuft und hinter dem sich der veränderbare Spalt (14) befindet, der, wiederum im Querschnitt der den Endanschlag bildenden Leiste, konzentrisch zur Außenseite des Kopfes in einem vorgegebenen Abstand (18) hinter dieser Außenseite verläuft.

2. Leistenförmiger Endanschlag nach Anspruch 1 dadurch gekennzeichnet, daß, erneut im Querschnitt der den Endanschlag bildenden Leiste, der Spalt (14) konAußenkontur (11,12,13) der Leiste (1) im kopfnahen Bereich folgt und kurz nach dem Einlaufen des Kopfhalbkreises (11) in die Leistenseitenwände (12,13) durch eine zu einer Symmetrieachse (4) der Leiste senkrechte Wand (16 f) geschlossen ist.

3. Leistenförmiger Endanschlag nach Anspruch 2 dadurch gekennzeichnet, daß der Übergang der Kammerseitenwände (16 b, 16 c) in die die Kammer (16) schließende Wand (16 f) bogenförmig verläuft.

4. Leistenförmiger Endanschlag nach Anspruch 2 oder 3 dadurch gekennzeichnet, daß zwischen der Profilkammer (16) im kopfnahen Bereich (2) und dem Fuß (3) der den Endanschlag bildenden Leiste eine weitere Kammer (17) vorgesehen ist, die einen kreisförmigen Querschnitt hat.

5. Leistenförmiger Endanschlag nach einem der Ansprüche 1 bis 4 dadurch gekennzeichnet, daß der Fuß (3) symmetrisch zu einer Symmetrieachse (4) der den Endanschlag bildenden Leiste leistenförmige Rücksprünge (7, 8) und seitliche Außenlippen aufweist.

6. Leistenförmiger Endanschlag nach einem der Ansprüche 1 bis 5 dadurch gekennzeichnet, daß er aus einem elektrisch nicht leitfähigen Polymer besteht, in das zu beiden Seiten des Spalts (14) elektrisch leitende Partikel (15) eingebettet sind, die zumindest teilweise in den Spaltwänden liegen.
